# EUROPÄISCHE PATENTSCHRIFT

(11) **EP 2 604 159 B1**
(45) Veröffentlichungstag und Bekanntmachung des Hinweises auf die Patenterteilung: **02.09.2015**
(21) Anmeldenummer: 12196453.0
(22) Anmeldetag: 11.12.2012
(51) Int. Cl.: A47J 43/24

(54) **Antriebsvorrichtung für eine Salatschleuder**
Driving mechanism for a salad spinner
Dispositif d´entraînement pour une essoreuse à salade

(30) Priorität: 13.12.2011 DE 202011052280 U
(43) Veröffentlichungstag der Anmeldung: 19.06.2013
(73) Patentinhaber: Emsa GmbH, 48282 Emsdetten (DE)
(72) Erfinder:
(74) Vertreter: Tarvenkorn, Oliver

(56) Entgegenhaltungen:
- EP-A1- 1 797 805
- WO-A1-03/043477
- DE-U1-202008 017 009
- FR-A1- 2 942 384
- US-A1- 2010 263 555

## Beschreibung

Die Erfindung betrifft eine Antriebsvorrichtung für eine Salatschleuder mit den Merkmalen des Oberbegriffs des Anspruchs 1.

Eine Salatschleuder dient dazu, Salat oder anderes Gemüse nach dem Waschen zu trocknen. Der Salat oder das Gemüse wird in einen siebförmigen Innenbehälter gegeben, der drehbar in einem geschlossenen Außenbehälter gelagert ist. Der Innenbehälter wird auf eine hohe Drehzahl beschleunigt, so dass durch die Zentrifugalkräfte das anhaftende Wasser nach außen abgeschleudert wird und an der Behälterwand des Außenbehälters abläuft. Derartige Salatschleudern werden beispielsweise in DE 20 2008 017 009 U1, US 2010/0263 555, FR 2 942 384 A1, WO 03/043 477 oder EP 1 797 805 offenbart.

Um den Innenbehälter in Rotation zu versetzen, ist an einem auf den Außenbehälter aufgesetzten Deckel eine Antriebsvorrichtung vorgesehen. Durch Ziehen an einem Zugseil wird in der Antriebsvorrichtung eine Riemenscheibe in Bewegung gesetzt, welche mit einem Antriebsrad gekoppelt ist und welches eine Rückholfeder enthält, um die Riemenscheibe zurückzudrehen, nachdem der Bediener am Zugseil gezogen hat, und dabei das Zugseil wieder einzuholen und erneut auf der Riemenscheibe aufzuwickeln.

Auf der Abtriebsseite ist ein weiteres Zahnrad vorgesehen, das insbesondere durch Formschlussmittel mit dem Innenbehälter der Salatschleuder koppelbar ist. Zwischen dem Antriebsrad und dem Abtriebsrad ist ein Ritzel vorgesehen, welches insbesondere ständig mit dem Antriebsrad im Eingriff steht, so dass es mit der Beschleunigung des Antriebsrades auf einer Bahn parallel zum Teilkreis des Antriebsrades bewegt wird und dann in den Eingriff mit dem Abtriebsrad gelangt.

Antriebsrad und Abtriebsrad sind somit miteinander gekoppelt, während der Benutzer an dem Zugseil zieht, so dass sich die Kraft des Benutzers über das Seil auf die Riemenscheibe, darüber auf das Antriebsrad, auf das Ritzel, auf das Abtriebsrad und schließlich auf den Innenbehälter überträgt.

Hat der Benutzer das Zugseil mit einem Hub aus der Antriebsvorrichtung ausgezogen, also maximal von der Riemenscheibe abgewickelt, so kann er eine weitere Beschleunigung des Innenbehälters erst vornehmen, wenn das Zugseil aufgrund der Wirkung der Rückhohlfeder wieder in die Antriebsvorrichtung eingeholt worden ist.

Um die Rotation des Innenbehälters weiter zu erhöhen, muss der Benutzer aber bei seiner Zugbewegung mit zunehmend höherer Geschwindigkeit ziehen. Der Beschleunigung des Innenbehälters sind dabei Grenzen durch die ergonomisch vertretbare Länge des Zugseils und die vom Bediener aufzubringende Zuggeschwindigkeit gesetzt, denn ein bestimmter Anteil des Weges des Zugseils wird zunächst schon alleine dafür benötigt, das Antriebsrad und das Ritzel auf die bereits vorhandene Drehzahl des Abtriebsrads zu beschleunigen und das Ritzel in das Abtriebsrad einspuren zu lassen. Nur auf dem verbleibenden Teil der Zugstrecke kann der Benutzer dann noch eine weitere Beschleunigung des Innenbehälters bewirken.

Da der Trocknungsgrad unmittelbar von den Zentrifugalkräften abhängig ist und diese wiederum im Quadrat mit der Drehzahl steigen, ist es wünschenswert, die mit einer noch bequemen Bedienungsweise erreichbare Drehzahl des Innenbehälters zu erhöhen. Eine starre Änderung des Übersetzungsverhältnisses wäre dazu zwar möglich, würde jedoch hohe Kräfte in der Anfangsphase bedingen. Der Benutzer müsste also die mit der Antriebsvorrichtung versehene Salatschleuder wesentlich fester greifen, um die Schleuder gegen die hohe Zugkraft zu halten, die notwendig wäre, um eine Anfangsbeschleunigung zu bewirken. Auch dies widerspräche einer bequemen Handhabungsweise einer Salat- bzw. Gemüseschleuder.

Aufgabe der vorliegenden Erfindung ist es somit, eine Antriebsvorrichtung für eine Salatschleuder anzugeben, bei welcher das Übersetzungsverhältnis während der Rotation des Innenbehälters veränderbar ist.

Diese Aufgabe wird durch eine Antriebsvorrichtung mit den Merkmalen des Schutzanspruchs 1 gelöst.

In der Antriebsvorrichtung der Erfindung wird ein wenigstens zweistufiges Getriebe geschaffen, das der Benutzer während des Schleudervorgangs umschalten kann. Er kann somit den Schleudervorgang mit einem kleineren Übersetzungsverhältnis beginnen, welches durch die Teilkreisdurchmesser des Antriebsrades und des Abtriebsrades bestimmt ist. Dabei besitzt in der Regel das Antriebsrad einen etwas kleineren Durchmesser gegenüber dem Abtriebsrad, um mit der Untersetzung die für die Beschleunigung des Innenbehälters aus dem Stillstand notwendigen Kräfte zu reduzieren.

Das Ritzel steht in der ersten Getriebestufe mit beiden Rädern im direkten Eingriff, so dass es rein übertragend wirkt, ohne das Übersetzungsverhältnis zu ändern. Der Benutzer kann somit die Salatschleuder mit der ersten Getriebestufe in der ihm bekannten Weise auf eine Grunddrehzahl beschleunigen.

Erfindungswesentlich ist, dass das Ritzel wenigstens zwei Zahnkränze aufweist und dass es derart in einem insbesondere gabelförmigen Lagerelement gelagert ist, dass es außerdem parallel zu seiner Rotationsachse axial verschiebbar ist. Dabei bleibt das Ritzel mit seinem ersten Zahnkranz im Eingriff mit einem der beiden Räder, wobei dann aber in der zweiten Getriebeposition der zweite Zahnkranz im Eingriff mit dem jeweils anderen Rad steht.

Vorzugsweise besitzt der erste Zahnkranz eine kleinere Zähnezahl als der zweite Zahnkranz. Das dadurch geschaffene Übersetzungsverhältnis liegt bei einer bevorzugten Ausführungsform bei etwa 1 : 1,7.

Denkbar ist auch, das Prinzip derart umzukehren, dass das Ritzel in der Ausgangsstellung mit unterschiedlichen Zahnkränzen im Eingriff steht und dadurch das Übersetzungsverhältnis geändert wird und dass nur nach aktiver Umschaltung durch den Bediener eine Getriebestufe wirksam ist, die geringere Anzugskräfte erfordert, um den ruhenden Innenbehälter vorzubeschleunigen.

Weiterhin denkbar ist ein mehrfaches Getriebe mit einem Ritzel mit mehr als zwei Zahnkränzen, die durch schrittweise axiale Verschiebung des Ritzels und seines Lagerelements sukzessive in den Eingriff gelangen könnten.

In allen Fällen ist vorzugsweise ein Federelement vorgesehen, so dass die Umschalttaste und die darüber gekoppelten Getriebeteile in die Ausgangsstellung zurückkehren, sobald der Bediener die Taste nicht mehr drückt.

Der zweite, vorzugsweise größere Zahnkranz gelangt dann nach der Umschaltung in die zweite Getriebestufe in den Eingriff mit dem Abtriebsrad. Das Ritzel wird nun an seinem ersten, kleineren Zahnkranz durch das Antriebsrad auf eine bestimmte Drehzahl beschleunigt. Aufgrund des größeren Teilkreises des zweiten, größeren Zahnkranzes erhöht sich die Drehzahl des Abtriebsrades gemäß dem Übersetzungsverhältnis innerhalb des zweistufigen Ritzels.

Eine bevorzugte Ausführungsform der erfindungsgemäßen Antriebsvorrichtung sieht eine besondere Lagerung des Ritzels vor, die sowohl ein selbsttätiges Einspuren des Ritzels in das Abtriebsrad bewirkt - und zwar gleichermaßen in beiden Getriebestellungen - und die zudem eine leichte Umschaltung im laufenden Betrieb ermöglicht.

Die Ausrichtung des Lagerelements ist dabei vorzugsweise derart, dass eine gedachte Verbindungslinie zwischen der Schwenkachse des Lagerelements für das Ritzel und der Rotationsachse des Ritzels selber in etwa parallel zu einer Tangente am Abtriebsrad angeordnet ist. Die Schwenkachse ist dabei in Drehrichtung gesehen hinten und die Rotationsachse vorne angeordnet, so dass sich ein Schleppeffekt ergibt, sobald die Räder in Drehung versetzt worden sind.

Außerdem ist bevorzugt, dass die Winkelhalbierende zwischen den beiden Positionen des Lagerelementes des Ritzels auf einer Verbindungslinie zwischen dem Schwenklager und dem Mittelpunkt des Antriebsrades positioniert ist. Das Halterungselement vollzieht also nur eine kleine Schwenkbewegung um einen minimalen Winkel beidseits der Winkelhalbierenden, um entweder das kleine Ritzel mit beiden Rädern in Eingriff zu bringen oder aber um nach der Verschiebung in Z-Richtung in der anderen Höhenebene den kleinen Kranz des Ritzels mit dem Antriebsrad und den großen Kranz mit dem Abtriebsrad in Eingriff zu bringen.

Um ein zuverlässiges Einspuren des Ritzels in beiden Getriebestufen zu ermöglichen, ist es vorteilhaft, an der Lagerung des Ritzels eine Reibungserhöhung zu bewirken, z.B. durch zähflüssige Schmierstoffe oder durch reibungserhöhende Beschichtungen. Reibungserhöhende Beschichtungen können entweder zwischen der Achse und der Buchse des Ritzels vorgesehen sein oder stirnseitig oder beides.

Vorzugsweise ist ein Abschnitt eines Silikonschlauches vorgesehen, der die Achse des Ritzels umschließt und eine solche Länge besitzt, dass er von der angrenzenden Lagerung, insbesondere in Form einer Gabel des Lagerelements, leicht gestaucht wird und somit in ständiger Berührung mit dem Lagerelement ist.

Die Reibungskräfte müssen so hoch ausgelegt werden, dass Kräfte im Bereich der Lagerung des Ritzels entstehen und so ein Drehmoment auf das Schwenklager des gabelförmigen Lagerelements des Ritzels ausgeübt werden. Bei einer zu geringen Reibung könnte das Ritzel zwar beschleunigt werden, da es im ständigen Eingriff mit dem Antriebsrad steht, jedoch würde möglicherweise die Halterung nicht verschwenken, so dass es nicht zum Einspuren in das Abtriebsrad kommt.

Die Erfindung wird nachfolgend mit Bezug auf die Zeichnung näher erläutert. Die Figuren zeigen im Einzelnen:
- Fig. 1: eine Antriebsvorrichtung als Teil einer Salatschleuder in perspektivischer Ansicht,
- Fig. 2: eine teilweise geöffnete Antriebsvorrichtung in perspektivischer Ansicht,
- Fig. 3a, 3b: das Getriebe der Antriebsvorrichtung in perspektivischer Ansicht in verschiedenen Schaltzuständen,
- Fig. 4a, 4b: das Getriebe der Antriebsvorrichtung in Draufsicht in verschiedenen Schaltzuständen und
- Fig. 5: das Getriebe der Antriebsvorrichtung in Seitenansicht.

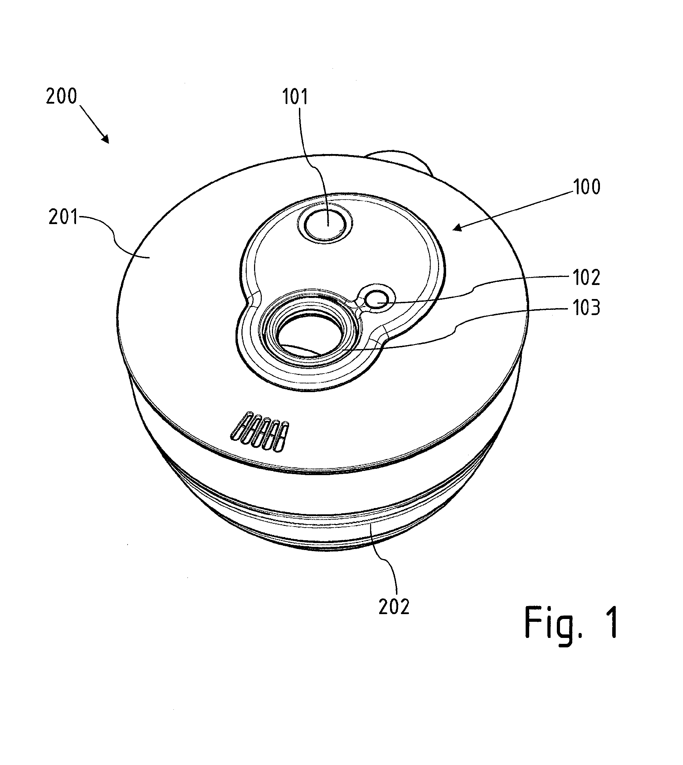

Fig. 1 zeigt eine Salatschleuder 200, die im Wesentlichen aus einem Außenbehälter 202 und einem Deckel 201 besteht, in welchem eine Antriebsvorrichtung 100 integriert ist. Über die Abtriebsvorrichtung 100 wird ein im Inneren angeordneter, hier nicht sichtbarer Innenbehälter rotiert.

Die Antriebsvorrichtung 100 besitzt zur Außenseite des Deckels 201 hin drei Bedienelemente:
- Ein Ring 103 bildet das Ende des ausziehbaren Zugseils.
- Eine Umschalttaste 101 dient der Umschaltung von der einen in die andere Getriebestufe der erfindungsgemäßen Antriebsvorrichtung.
- Eine Stopptaste 102 dient dem Abbremsen des Innenbehälters nach dem Ende des Schleudervorgangs.

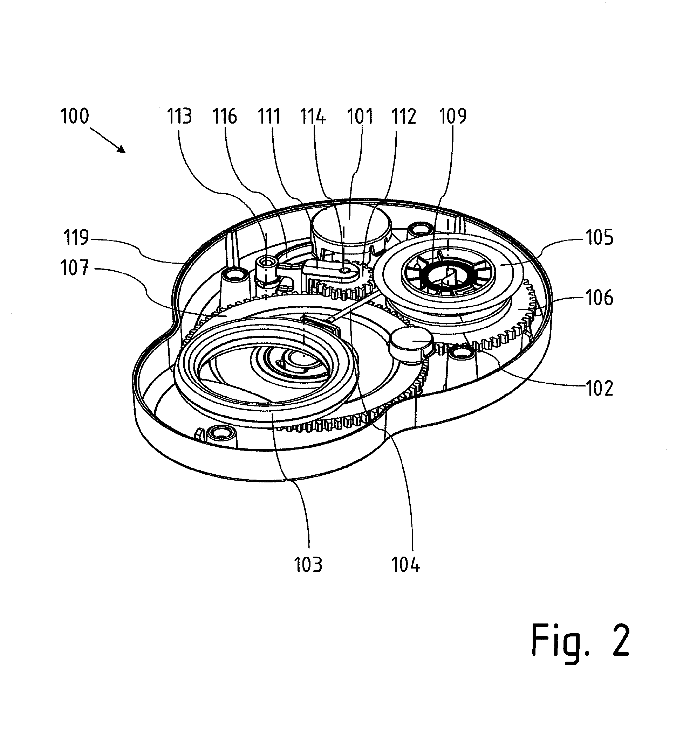

Die erfindungsgemäße Antriebsvorrichtung 100 ist im Detail in Fig. 2 dargestellt, wobei nur ein Gehäuseunterteil 119 mit den darin angeordneten weiteren Bauteilen sichtbar ist; zur besseren Darstellung ist ein Gehäuseoberteil entfernt.

Vorne erkennbar ist wiederum der Ring 103, der mit dem Zugseil 104 verbunden ist. Das Zugseil 104 ist um eine Riemenscheibe 105 gewickelt, die mittels einer Rückholfeder 109 zurückdreht, sobald die Kraft auf das Zugseil 104 nachlässt.

Direkt gekoppelt mit der Riemenscheibe 105 ist ein Antriebsrad 106, das im dargestellten Ausführungsbeispiel als gerade verzahntes Zahnrad ausgebildet ist. Ein Abtriebsrad 107 ist ebenfalls drehbar im Gehäuseunterteil 119 gelagert und besitzt an seiner Unterseite Mittel zur formschlüssigen Kopplung mit einem Innenbehälter.

Vorne rechts erkennbar ist die Stopptaste 102, die direkt auf eine stirnseitige Flanke des Abtriebsrades 107 wirkt, wenn die Stopptaste 102 vom Benutzer herabgedrückt wird. Dabei wird das Abtriebsrad 107 um eine geringe Distanz axial nach unten verschoben oder im Randbereich verformt, so dass die Unterseite des Abtriebsrads 107 gegen ein im Gehäuseboden gelagerten, unterhalb des Abtriebsrads 107 angeordneten Element drückt, welches zumindest an seiner Oberseite einen reibungserhöhenden Belag besitzt oder z.B. ganz aus einem elastomeren Werkstoff besteht.

Zwischen dem Antriebsrad 106 und dem Abtriebsrad 107 ist ein mit gleicher Verzahnung ausgebildetes Ritzel 112 angeordnet. In Fig. 2 erkennbar ist davon der obere Zahnkranz mit der größeren Zähnezahl, der sich jedoch bei der in Fig. 2 gezeigten Stellung nicht im Eingriff mit einem der Räder 106, 107 befindet.

Das Ritzel 112 ist an einer Drehachse 114 drehbar gelagert. Die Drehachse 114 ist in einem gabelförmigen Lagerungselement 111 aufgenommen. Die Gabelform ermöglicht eine Einspannung der Drehachse 114 zu beiden Seiten des Ritzels 112 und verhindert damit eine Schrägstellung des Ritzels 112 bei größeren Kräften. Es wird vielmehr eine exakte Ausrichtung der Rotationsachse 114 parallel zu den jeweiligen Rotationsachsen der Räder 106, 107 sichergestellt.

Das gabelförmige Lagerelement 111 ist seinerseits am rückwärtigen Ende mit einer Buchse versehen, um eine Schwenkbarkeit um eine Schwenkachse 113 und zugleich eine axiale Verschiebung des gesamten Lagerelements 111 entlang der Schwenkachse 113 zu ermöglichen. Die axiale Verschiebung des Lagerelements 111 wird über ein Bügelelement 116 bewirkt, welches mit der Umschalttaste 101 in Verbindung steht. Die Umschalttaste 101 bzw. das Bügelelement 116 werden nach dem Herabdrücken durch den Benutzer durch ein hier nicht sichtbares Federelement in ihre Ausgangsstellung zurückgeführt.

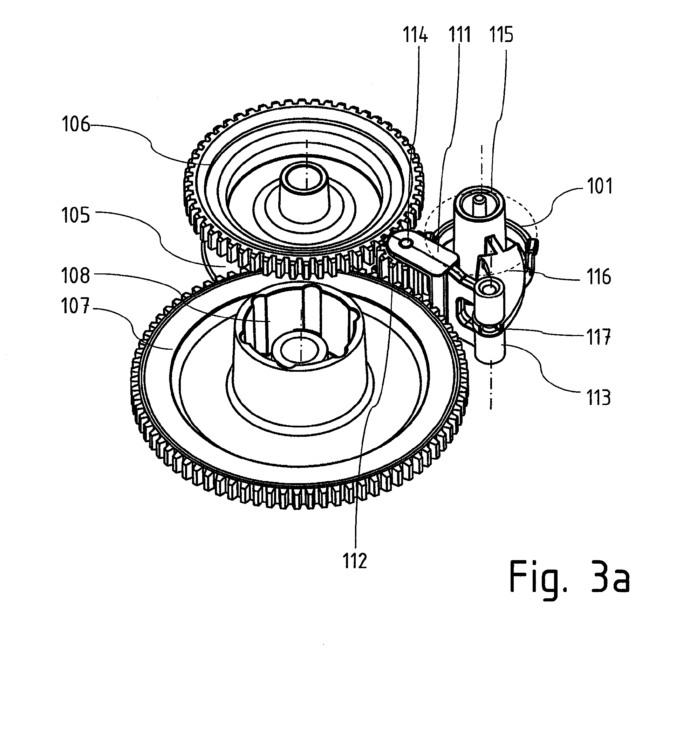

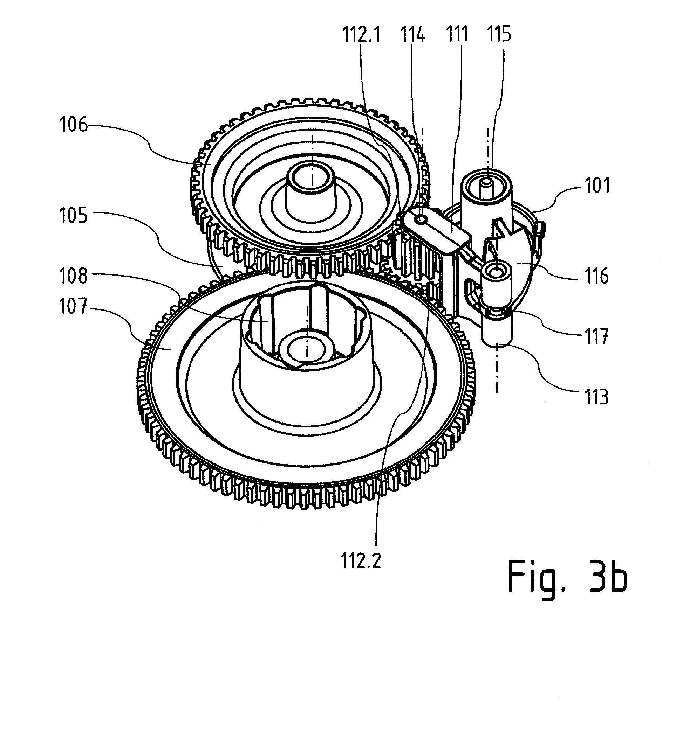

Die besondere Ausbildung der Lagerung des Ritzels und die axiale Verschiebung sind in den Figuren 3a und 3b in einer perspektivischen Ansicht dargestellt. Die Blickrichtung ist dabei jeweils, wenn man die Position der Antriebsvorrichtung nach Figur 2 zugrunde legt, von schräg unten gewählt.

Im Vordergrund erkennbar ist das Abtriebsrad 107, welches am Innenumfang eines zylindrischen Mantelabschnitts formschlüssige Mittel 108 zur Verbindung mit dem hier nicht gezeigten Innenbehälter besitzt. Der Zahnkranz des Antriebsrades 106, welches mit der Riemenscheibe 105 gekoppelt ist, ragt bei dem dargestellten Ausführungsbeispiel der Antriebsvorrichtung 100 über den Zahnkranz des Abtriebsrades 107 hinaus, um Platz zu sparen.

Deutlich sichtbar ist das Lagerelement 111 des Ritzels 112. Die Umschalttaste 101 ist hier von der Unterseite her erkennbar. Die gestrichelte Linie deutet die Position an, in welcher der Umschaltknopf 101 herabgedrückt ist, um in die zweite Getriebestufe umzuschalten.

Starr mit dem Umschaltknopf 101 verbunden ist das Bügelelement 116, welches ein gabelförmiges Ende 117 besitzt. Diese greift in eine Aussparung der Buchse 113 des Lagerelements 111 und umschließt dabei die zentrale Schwenkachse. Wird nun vom Benutzer der Umschaltknopf 101 bewegt, so wird über das Bügelelement 116 das Lagerelement 111 mit dem darin gelagerten Ritzel 112 bewegt. Figur 3b zeigt die Stellung nach dem Umschalten in die zweite Getriebestufe. Der zweite, größere Zahnkranz 112.2 des Ritzels 112 ist im Eingriff mit der Verzahnung des Abtriebsrads 107, während der kleinere Zahnkranz 112.1 nach wie vor im Eingriff mit dem Antriebsrad 106 ist. Deutlich erkennbar in Fig. 3b ist auch, dass der kleinere Zahnkranz 112.1 eine wesentlich größere axiale Erstreckung besitzt, damit letzterer in beiden axialen Positionen des Ritzels 112 zugleich mit der Verzahnung des Antriebsrades 106 bzw. des Abtriebsrads 107 kämmt.

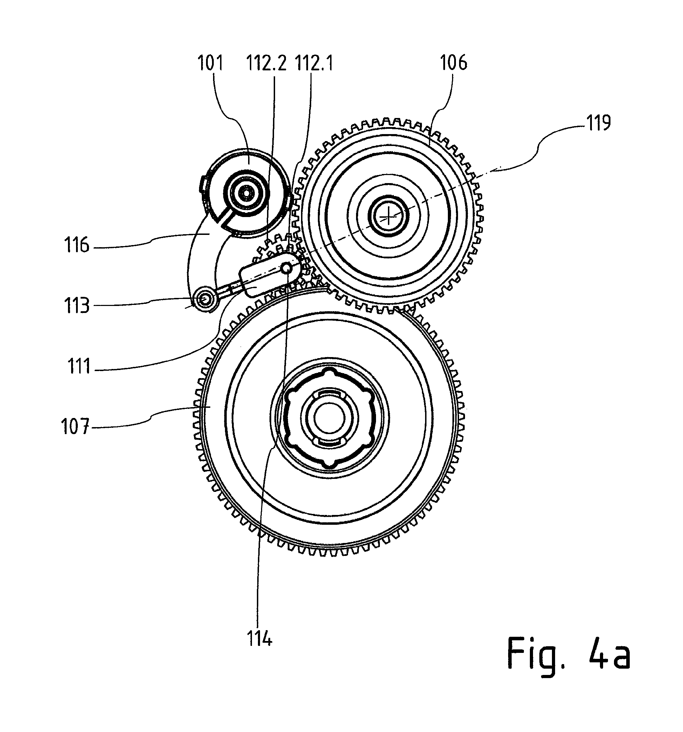

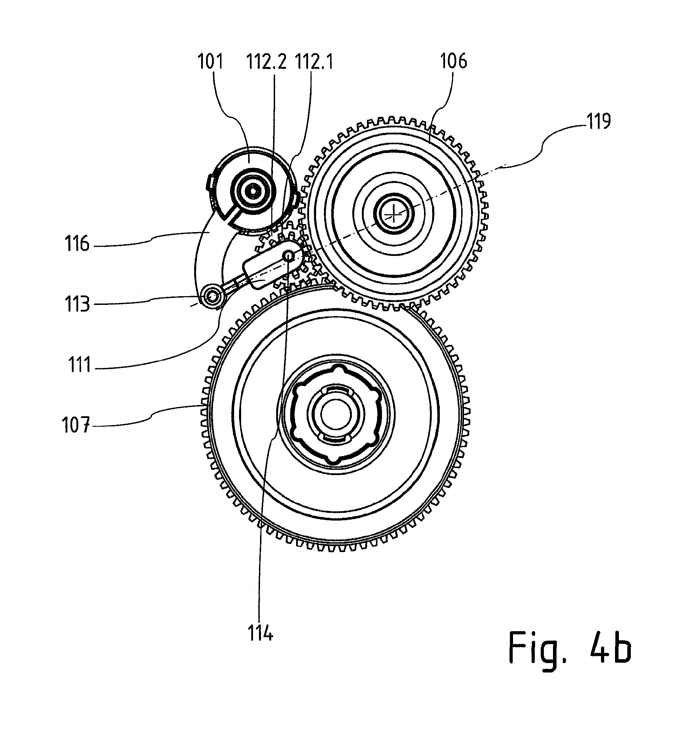

Die Figuren 4a und 4b zeigen die beiden Getriebepositionen in einer Draufsicht von unten. In Figur 4a ist die erste Getriebestufe dargestellt, in welcher sich der Zahnkranz 112.1 mit den beiden Rädern 106, 107 im Eingriff befindet. Erkennbar ist hierbei, dass die Mittelachse des Halteelements 111 um einen geringen Winkel rechts neben der mit 119 bezeichneten Winkelhalbierenden liegt, welche sich zwischen der Schwenkachse 113 und dem Mittelpunkt des Rades 106 erstreckt.

In der zweiten Getriebestufe gemäß Fig. 4b ist der kleinere Zahnkranz 112.1 des Ritzels 112 noch im Eingriff mit dem Antriebsrad 106. Der größere Zahnkranz 112.2 befindet sich im Eingriff mit dem Abtriebsrad 107. Das Halterungselement 111 ist gegenüber der Winkelhalbierenden 119 um einen kleinen Winkel nach links verschwenkt.

Die insbesondere aus den Fig. 4a und 4b ersichtliche Ausrichtung der Mittelachse des Lagerelements 111 führt dazu, dass die Achse 114 des Ritzels 112 auf einer kreisbogenförmigen Bahn um das Zentrum der Schwenkachse 113 liegt, wobei sie idealerweise parallel zum Teilkreis des Antriebsrades 106 verschoben werden müsste. Jedoch sind die tatsächlichen notwendigen Schwenkwinkel erfindungsgemäß so klein gewählt, dass der Teilkreis des Ritzels 112.1 annähernd auf dem Teilkreis der Verzahnung des Antriebsrades 106 läuft. Der radiale Versatz zwischen der idealen und der realen Bahn ist so gering, dass er durch das Spiel in der Verzahnung und in der Gelenkkette zwischen der Rotationsachse 114, dem Lagerelement 111, der Schwenkachse 113 und dem Bügelelement 116 problemlos ausgeglichen werden kann.

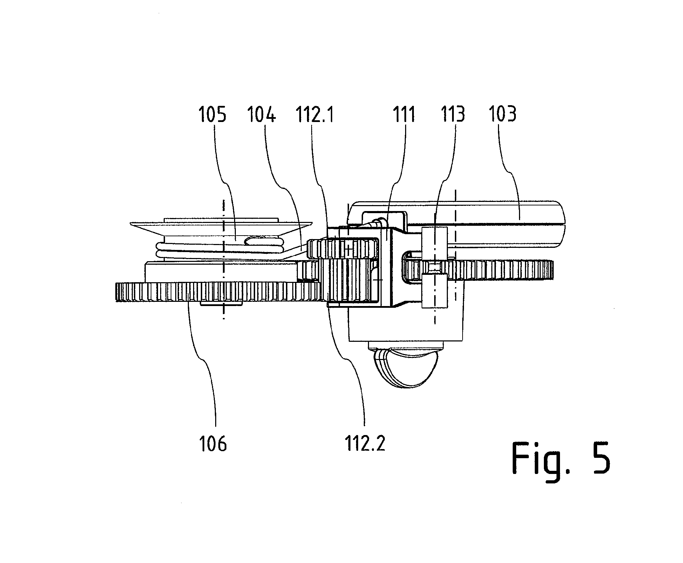

Figur 5 zeigt einen Blick auf das Getriebe in der erfindungsgemäßen Antriebsvorrichtung 100, und zwar, wenn man die Ansicht nach Figur 2 zu Grunde legt, von hinten links aus Richtung des Umschaltknopfes 101. Der Umschaltknopf 101 mit dem Bügelelement 116 ist in der Ansicht nach Figur 5 zur besseren Darstellung entfernt. Dargestellt ist die erste Getriebestufe, in der das Ritzel 112 mit seinem kleinen Zahnkranz 112.1 mit beiden Rädern 106, 107 im Eingriff ist.

## Patentansprüche

1. Antriebsvorrichtung (100) für eine Salatschleuder (200), wenigstens umfassend:
- ein Antriebsrad (106), das mit einer Riemenscheibe (105) gekoppelt ist, an welcher ein Zugseil (104) befestigt ist,
- eine Rückholfeder (109) zum Rückdrehen der Riemenscheibe (105) und/oder des Antriebsrades (106),
- ein Abtriebsrad (107) zur Kopplung mit einem drehbar gelagerten Innenbehälter,
- ein beweglich gelagertes Antriebsritzel (112), das im Eingriff mit dem Antriebsrad (106) steht und mit Beschleunigung des Antriebsrades (106) in den Eingriff mit dem Abtriebsrad (107) zu bringen ist,
**dadurch gekennzeichnet, dass** ein mehrstufiges Ritzel (112) mit wenigstens einem ersten und einem zweiten Zahnkranz (112.1, 112.2) vorgesehen ist, das in einem Lagerelement (111) gelagert ist, welches parallel zur Rotationsachse (114) von einer ersten axialen Position in eine zweite axiale Position verschiebbar ist.

2. Antriebsvorrichtung (100) nach Anspruch 1, **dadurch gekennzeichnet, dass** in der ersten Position der erste Zahnkranz (112.1) des Ritzels (112) mit beiden Rädern (106, 107) im Eingriff steht und in der zweiten Position der erste Zahnkranz (112.1) des Ritzels (112) mit einem der beiden Räder (106) und der zweite Zahnkranz (112.2) mit dem jeweils anderen Rad (107) im Eingriff steht.

3. Antriebsvorrichtung (100) nach Anspruch 2, **dadurch gekennzeichnet, dass** der erste Zahnkranz (112.1) eine kleinere Zähnezahl hat als der zweite Zahnkranz (112.2) .

4. Antriebsvorrichtung (100) nach einem der Ansprüche 1 bis 3, **dadurch gekennzeichnet, dass** das Lagerelement (111) des Ritzels (112) an einer zur Rotationsachse (114) parallelen Schwenkachse (113) gelagert ist, wobei
eine Verbindungslinie zwischen der Schwenkachse (113) und der Rotationsachse (114) in etwa parallel zu einer Tangente am Abtriebsrad (107) angeordnet ist und wobei die Rotationsachse (114) in Bezug auf die Drehrichtung des Abtriebsrades vorne angeordnet ist und die Schwenkachse (113) hinten angeordnet ist.

5. Antriebsvorrichtung (100) nach einem der Ansprüche 1 bis 4, **dadurch gekennzeichnet, dass** das Lagerelement (111) über eine Umschalttaste (101) verschiebbar ist, welche mit einem Bügelelement (116) verbunden ist, das mit dem Lagerelement (111) formschlüssig koppelbar ist.

6. Antriebsvorrichtung (100) nach Anspruch 5, **dadurch gekennzeichnet, dass** das Bügelelement (116) ein gabelförmiges Ende aufweist, das in einen Schlitz in einer Buchse des Lagerelements (111) an der Schwenkachse (113) eingreift und das die Schwenkachse (113) umschließt.

7. Antriebsvorrichtung (100) nach wenigstens einem der vorhergehenden Ansprüche, **dadurch gekennzeichnet, dass** zwischen der Buchse des Lagerelements (111) und der Schwenkachse (113) reibungserhöhende Mittel vorgesehen sind.

8. Antriebsvorrichtung (100) nach wenigstens einem der vorhergehenden Ansprüche, **dadurch gekennzeichnet, dass** die Räder (106, 107) und das Ritzel (112) geradeverzahnt sind.

9. Antriebsvorrichtung (100) nach wenigstens einem der Ansprüche 1-7, **dadurch gekennzeichnet, dass** die Räder (106, 107) und das Ritzel (112) schrägverzahnt sind.

10. Antriebsvorrichtung (100) nach wenigstens einem der vorhergehenden Ansprüche, **dadurch gekennzeichnet, dass** eine Stopptaste (102) mit einem auf eine Stirnseite des Abtriebsrades (107) aufsetzbaren Bremsbelag vorgesehen ist.

11. Antriebsvorrichtung (100) nach wenigstens einem der vorhergehenden Ansprüche, **dadurch gekennzeichnet, dass** mittels einer Stopptaste (102) das Abtriebsrad (107) mit seiner Stirnseite an ein unterhalb des Abtriebsrades (107) angeordnetes Bremselement anpressbar ist.

## Claims

1. Driving mechanism (100) for a salad spinner (200), at least comprising:
- a drive gear (106) which is coupled to a pulley (105), to which a traction cable (104) is fastened,
- a restoring spring (109) for rotating back the pulley (105) and/or the drive gear (106),
- a driven gear (107) for coupling to a rotatably mounted inner container,
- a movably mounted drive pinion (112) which is in engagement with the drive gear (106) and, on acceleration of the drive gear (106), can be brought into engagement with the driven gear (107),
**characterized in that** a multi-stage pinion (112) having at least one first and one second toothed ring (112.1, 112.2) is provided, which pinion is mounted in a bearing element (111) which is displaceable parallel to the axis of rotation (114) from a first axial position into a second axial position.

2. Driving mechanism (100) according to Claim 1, **characterized in that**, in the first position, the first toothed ring (112.1) of the pinion (112) is in engagement with the two gears (106, 107) and, in the second position, the first toothed ring (112.1) of the pinion (112) is in engagement with one of the two gears (106) and the second toothed ring (112.2) is in engagement with the other gear (107) in each case.

3. Driving mechanism (100) according to Claim 2, **characterized in that** the first toothed ring (112.1) has a smaller number of teeth than the second toothed ring (112.2).

4. Driving mechanism (100) according to one of Claims 1 to 3, **characterized in that** the bearing element (111) of the pinion (112) is mounted on a pivot axis (113) parallel to the axis of rotation (114), wherein a connecting line between the pivot axis (113) and the axis of rotation (114) is arranged approximately parallel to a tangent to the driven gear (107), and wherein the axis of rotation (114) is arranged at the front, and the pivot axis (113) is arranged at the rear, with respect to the direction of rotation of the driven gear.

5. Driving mechanism (100) according to one of Claims 1 to 4, **characterized in that** the bearing element (111) is displaceable via a switchover button (101) which is connected to a clip element (116) which is coupleable to the bearing element (111) in a form-fitting manner.

6. Driving mechanism (100) according to Claim 5, **characterized in that** the clip element (116) has a fork-shaped end which engages in a slot in a bushing of the bearing element (111) on the pivot axis (113) and which surrounds the pivot axis (113).

7. Driving mechanism (100) according to at least one of the preceding claims, **characterized in that** friction-increasing means are provided between the bushing of the bearing element (111) and the pivot axis (113).

8. Driving mechanism (100) according to at least one of the preceding claims, **characterized in that** the gears (106, 107) and the pinion (112) are straight-toothed.

9. Driving mechanism (100) according to at least one of Claims 1-7, **characterized in that** the gears (106, 107) and the pinion (112) are helically toothed.

10. Driving mechanism (100) according to at least one of the preceding claims, **characterized in that** a stop button (102) is provided with a brake pad which can be placed onto an end side of the driven gear (107).

11. Driving mechanism (100) according to at least one of the preceding claims, **characterized in that** the driven gear (107) can be pressed with the end side thereof by means of a stop button (102) onto a brake element arranged below the driven gear (107).

## Revendications

1. Dispositif d'entraînement (100) pour une essoreuse à salade (200), comprenant au moins:
- une roue d'entraînement (106), qui est couplée à une poulie à courroie (105), à laquelle un câble de traction (104) est fixé,
- un ressort de rappel (109) pour la rotation inverse de la poulie à courroie (105) et/ou de la roue d'entraînement (106),
- une roue de commande (107) pour le couplage à un récipient intérieur monté de façon rotative,
- un pignon d'entraînement (112) monté de façon mobile, qui est en prise avec la roue d'entraînement (106) et qui, avec l'accélération de la roue d'entraînement (106), doit être amené en prise avec la roue de commande (107),
**caractérisé en ce qu'**il est prévu un pignon à plusieurs étages (112) avec au moins une première et une deuxième couronnes dentées (112.1, 112.2), qui est monté dans un élément de palier (111), qui est déplaçable parallèlement à l'axe de rotation (114) d'une première position axiale à une deuxième position axiale.

2. Dispositif d'entraînement (100) selon la revendication 1, **caractérisé en ce que** dans la première position la première couronne dentée (112.1) du pignon (112) est en prise avec les deux roues (106, 107) et dans la deuxième position la première couronne dentée (112.1) du pignon (112) est en prise avec une des deux roues (106) et la deuxième couronne dentée (112.2) est en prise respectivement avec l'autre roue (107).

3. Dispositif d'entraînement (100) selon la revendication 2, **caractérisé en ce que** la première couronne dentée (112.1) comporte un plus petit nombre de dents que la deuxième couronne dentée (112.2).

4. Dispositif d'entraînement (100) selon l'une quelconque des revendications 1 à 3, **caractérisé en ce que** l'élément de palier (111) du pignon (112) est monté sur un axe de pivotement (113) parallèle à l'axe de rotation (114), dans lequel une ligne de liaison entre l'axe de pivotement (113) et l'axe de rotation (114) est disposée environ parallèlement à une tangente à la roue de commande (107) et dans lequel l'axe de rotation (114) est disposé en avant et l'axe de pivotement (113) est disposé en arrière par rapport au sens de rotation de la roue de commande.

5. Dispositif d'entraînement (100) selon l'une quelconque des revendications 1 à 4, **caractérisé en ce que** l'élément de palier (111) est déplaçable au moyen d'un bouton d'inversion (101), qui est relié à un élément d'étrier (116), qui peut être couplé par emboîtement avec l'élément de palier (111).

6. Dispositif d'entraînement (100) selon la revendication 5, **caractérisé en ce que** l'élément d'étrier (116) présente une extrémité en forme de fourche, qui s'engage dans une fente dans une douille de l'élément de palier (111) sur l'axe de pivotement (113) et qui se place autour de l'axe de pivotement (113).

7. Dispositif d'entraînement (100) selon au moins une des revendications précédentes, **caractérisé en ce qu'**il est prévu des moyens augmentant le frottement entre la douille de l'élément de palier (111) et l'axe de pivotement (113).

8. Dispositif d'entraînement (100) selon au moins une des revendications précédentes, **caractérisé en ce que** les roues (106, 107) et le pignon (112) ont des dentures droites.

9. Dispositif d'entraînement (100) selon au moins une des revendications 1 à 7, **caractérisé en ce que** les roues (106, 107) et le pignon (112) ont des dentures obliques.

10. Dispositif d'entraînement (100) selon au moins une des revendications précédentes, **caractérisé en ce qu'**il est prévu un bouton d'arrêt (102) avec une garniture de frein applicable sur un côté frontal de la roue de commande (107).

11. Dispositif d'entraînement (100) selon au moins une des revendications précédentes, **caractérisé en ce que** la roue de commande (107) peut être pressée, au moyen d'un bouton d'arrêt (102), par son côté frontal sur un élément de frein disposé en dessous de la roue de commande (107).
